# EUROPEAN PATENT APPLICATION

(11) **EP 2 475 199 A1**
(43) Date of publication of application: **11.07.2012**
(21) Application number: 10811128.7
(22) Date of filing: 23.03.2010
(51) Int. Cl.: H04W 36/08

(54) **HANDOVER METHOD AND DEVICE FOR AN ACCESS SERVICE NETWORK**

(30) Priority: 31.08.2009 CN 200910171627
(71) Applicant: ZTE Corporation, Shenzhen, Guangdong 518057 (CN)
(72) Inventor: PANG, Zaihai, Shenzhen Guangdong 518057 (CN); CAO, Chao, Shenzhen Guangdong 518057 (CN)
(74) Representative: Johnson, Richard Alan
(86) International application number: PCT/CN2010/071197
(87) International publication number: WO 2011/022962

(57) **Abstract**

A handover method and device for the ASN are provided in the present invention. The method comprises the steps: establishing a handover path for an ASN handover (601); a terminating network element of the handover path detecting whether the connection of the handover path is abnormal (602); and if it is detected that the connection is abnormal, an abnormal network element in the terminating network element notifying other network elements in the terminating network element to delete the abnormal handover path (603). The present invention effectively ensures the data consistency of data paths between the network elements, enhances the utilization rate of ASN network resources and the transmission efficiency of messages, and is beneficial to dealing with data service. Thus, it settles the problem that, in the handover method for the ASN in the relevant art, there exists the problem of inconsistency in the number of paths on the relevant network elements, which not only leads to the occupation of many ASN network resources, but also results in the loss of data messages, thereby resulting in a failure in data transmission for part of the services of the user, even all of the services of the user.

## Description

### Field of the Invention

The present invention relates to the communication field, and specifically, to a handover method and device for an access service network.

### Background of the Invention

With the development of the demand for the mobile terminals and the wide application of the wireless technology, the WiMAX (Worldwide Interoperability for Microwave Access), which is IEEE802.16 standard-based wireless metropolitan area network technology, develops more and more rapidly, and has a broad prospect.

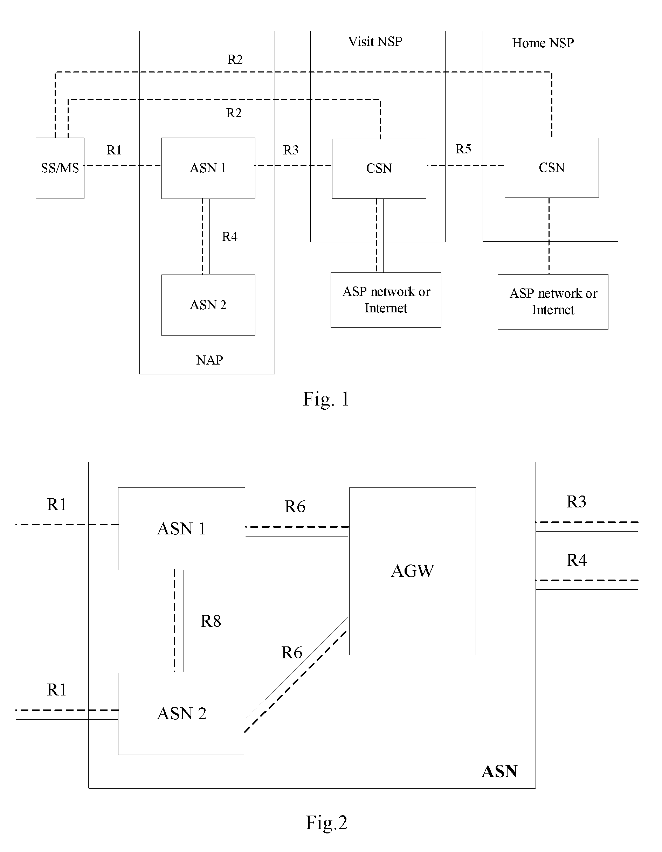

Figure 1 shows a diagram of the network architecture of the WiMAX, wherein CSN (Connectivity Service Network) is an connectivity service network; MS/SS (Mobile Station/Subscriber Station) is a mobile terminal; ASN (Access Service Network) is a set of message flows corresponding to functional entities associated with access services in the WiMAX network system; the ASNs are interconnected through an R4 interface; NSP (Network Service Provider) is the network service provider, NAP (Network Access Provider) is the network access provider; ASP (Application Service Provider) is the application service provider; the real line indicates a bearer plane; and the broken line indicates a control plane.

Figure 2 shows an internal structural diagram of the ASN, wherein an AGW (ASN Gateway, ASN convergence gateway, also referred to as ASN-GW) and a BS (Base Station) are connected through an internal interface R6, the R6 interface being formed by a series of Control Plane and Bearer Plane protocols.

The AGW further comprises an authentication and authorization functional entity (Authenticator), a path management functional entity DPF (Data Path Function), and a location management functional entity PC/LR (Paging Control/Location Register). The three functional entities can be either in a single physical entity, or on different physical entities.

The BS mainly provides functions such as wireless resource management, power measurement and control, and compression and encryption of air interface data. The Authenticator in the AGW mainly provides functions of authentication, authorization and charging. The DPF mainly provides functions such as path management and assistance in establishment of three-layer connection between higher layers and the MS. The PC/LR mainly provides functions such as location management and paging. The CSN mainly includes functional entities such as an HA (Home Agent), a DHCP (Dynamic Host Configuration Protocol) server, and an AAA (Authentication/Authorization/Accounting) server, and mainly provides functions such as accounting, authentication, authorization, assignment of IP address and Internet service access.

Serving ASN is the current serving ASN, and Anchor ASN is the anchor ASN.

Serving BS is the current serving BS, and Target BS is the target BS of handover.

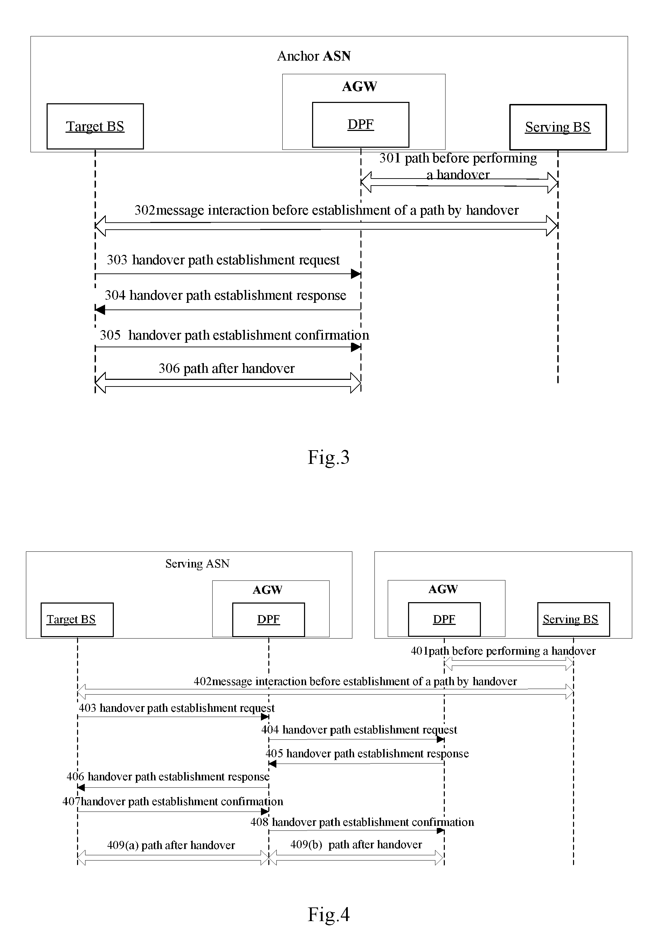

Figures 3-5 show an ASN handover method in the relevant art. The above flow will be introduced as follows in conjunction with Figures 3-5.

Figure 3 is a flowchart of a user performing a handover in the Anchor ASN, which includes the steps of:
Step 301, a path being established between the Serving BS and the DPF before performing a handover in the Anchor ASN for the user;
Step 302, performing message interaction among the Serving BS, the Target BS and the DPF before establishment of a data path by handover, such that the Serving BS can acquire information of the user;
Step 303, the Target BS sending a handover path establishment request message to the DPF to request for the establishment of a path;
Step 304, the DPF processing the handover path establishment request message and sending a handover path establishment response message to the Target BS;
Step 305, the Target BS sending a handover path establishment confirmation message to the DPF; and
Step 306, a path being established between the Target BS and the DPF after the completion of the handover.

Figure 4 is a flowchart of a user performing an inter-ASN handover, which includes the steps of:
Step 401, a path being established between the Serving BS and the DPF in the Anchor ASN before performing an inter-ASN handover;
Step 402, performing message interaction among the Serving BS, the Target BS and the DPFs before establishment of a data path by handover, such that the Serving BS can acquire information of the user;
Step 403, the Target BS in the Serving ASN sending a handover path establishment request message to the DPF in the Serving ASN to request for the establishment of a path;
Step 404, the DPF in the Serving ASN processing the handover path establishment request message, and forwarding the handover path establishment request message to the DPF in the Anchor ASN;
Step 405, the DPF in the Anchor ASN processing the handover path establishment request message, and sending a handover path establishment response message to the DPF in the Serving ASN, wherein the handover path establishment response message carries the processing result of the establishment of the path;
Step 406, the DPF in the Serving ASN processing the handover path establishment response message, and sending the handover path establishment response message to the Target BS in the Serving ASN, wherein the handover path establishment response message carries the processing result of the establishment of the path;
Step 407, the Target BS in the Serving ASN sending a handover path establishment confirmation message to the DPF in the Serving ASN;
Step 408, the DPF in the Serving ASN processing the handover path establishment confirmation message, and sending the handover path establishment confirmation message to the DPF in the Anchor ASN; and
Step 409, a path being established after the completion of the handover, the path being divided into two sections, viz. 409(a) and 409(b).

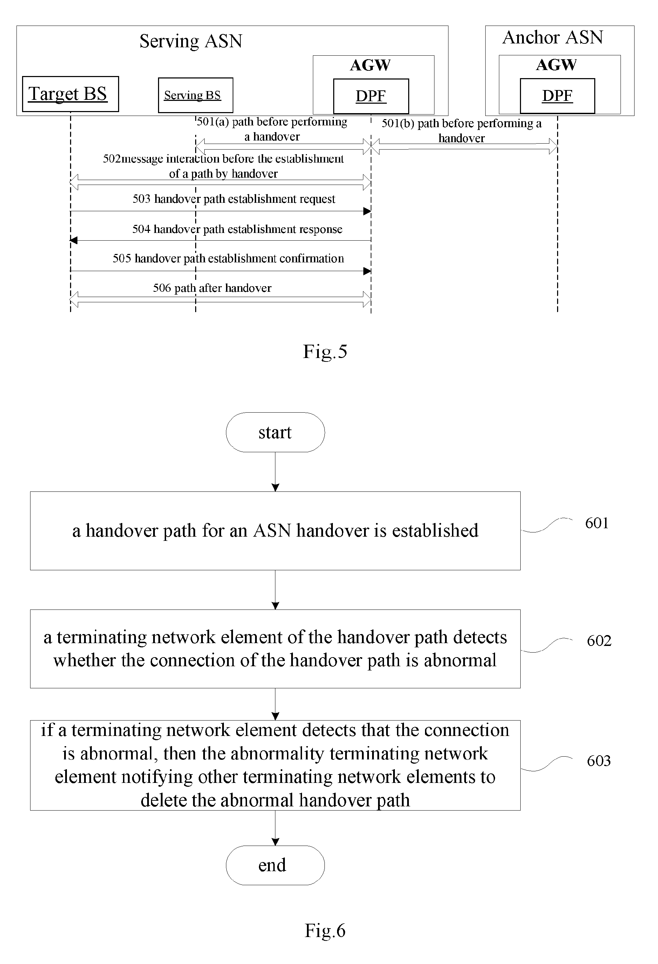

Figure 5 is a flowchart of a user performing a handover in the Serving ASN, which includes the steps of:
Step 501, a path being established before the handover, wherein the path is divided into two sections, viz. 501(a) and 501(b);
Step 502, performing message interaction among the Serving BS, the Target BS and the DPFs before the establishment of a data path by handover, such that the Serving BS can acquire information of the user;
Step 503, the Target BS sending a handover path establishment request message to the DPF to request for the establishment of a path;
Step 504, the DPF processing the request and sending a handover path establishment response message to the Target BS;
Step 505, the Target BS sending a handover path establishment confirmation message to the DPF; and
Step 506, a path being established between the Target BS and the DPF after the completion of the handover.

The inventors find that the following problems may exist in the ASN handover method in the relevant art:
1. when the user performs a handover in the Anchor ASN (as shown in Figure 3), after the DPF receives the handover path establishment confirmation message from the Target BS (Step 305), during the process in which the DPF processes the information carried in the message, the establishment of some paths may fail due to internal abnormality or other reasons, which further results in inconsistency in the number of paths on the BS and on the DPF;
2. when the user performs an inter-ASN handover (as shown in Figure 4), after the DPF in the Serving ASN receives the handover path establishment confirmation message from the Target BS (Step 407), the DPF processes the information carried in the message and notifies, through the path establishment confirmation message, the DPF in the Anchor ASN of the processing result (Step 408). During this process, for the DPF in the Serving ASN and the DPF in the Anchor ASN, the establishment of some paths may fail due to internal abnormality or other reasons, which further results in inconsistency in the number of paths on the Target BS in the Serving ASN, the DPF in the Serving ASN, and the DPF in the Anchor ASN; and
3. when the user performs a handover in the Serving ASN after an inter-ASN handover (as shown in Figure 5), when the DPF in the Serving ASN receives the handover path establishment confirmation message from the Target BS (Step 505), during the process in which the DPF processes the information carried in the message, the establishment of some paths may fail due to internal abnormality or other reasons, which further results in inconsistency in the number of paths on the BS and on the DPF and in inconsistency in the number of paths on the BS and on the DPF in the Anchor ASN.

In summary, when performing the handover in the Anchor ASN, the inter-ASN handover and the handover in the Serving ASN, the ASN handover method in the relevant art may have the problem of inconsistency in the number of paths on the relevant ASN network elements. This problem may not only lead to the occupation of much ASN network resource, but also result in the loss of data message, thereby resulting in a failure in data transmission for part of the services of the user, even all of the services of the user.

### Summary of the Invention

The present invention aims to provide a handover method and device for an access service network, which can solve the problem that when performing the handover in the Anchor ASN, the inter-ASN handover and the handover in the Serving ASN, the handover method for the ASN in the relevant art will cause inconsistency in the number of paths on the relevant ASN network elements, which not only leads to the occupation of much ASN network resource, but also results in the loss of data message, thereby resulting in a failure in data transmission for part of the services of the user, even all of the services of the user.

To achieve the above object, according to one aspect of the present invention, a handover method for the ASN is provided, which includes the steps of: establishing a handover path for an ASN handover; a terminating network element of the handover path detecting whether the connection of the handover path is abnormal; and if it is detected that the connection is abnormal, an abnormal network element in the terminating network element notifying other network elements in the terminating network element to delete the abnormal handover path.

Preferably, in the above method, the step of establishing a handover path for the ASN handover specifically includes: establishing a first handover path of a handover in an anchor ASN.

Preferably, in the above method, the step of a terminating network element of the handover path detecting whether the connection of the handover path is abnormal specifically comprises: a DPF terminated with the first handover path detecting whether a failed path exists in a first process of processing a handover path establishment confirmation message.

Preferably, in the above method, the step that, if it is detected that the connection is abnormal, an abnormality network element in the terminating network element notifying other network elements in the terminating network element to delete the abnormal handover path, specifically comprises: if a failed handover path exists in the first process, the DPF sending a path deletion request message to a target BS terminated with the first handover path, wherein the path deletion request message includs the failed handover path in the first process; the target BS deleting the failed handover path in the first process according to the received path deletion request message, and sending a path deletion response message to the DPF; and the DPF sending a path deletion confirmation message to the target BS according to the received path deletion response message.

Preferably, in the above method, the step of establishing a handover path for the ASN handover specifically includes: establishing a second handover path of an inter-ASN handover.

Preferably, in the above method, the step of a terminating network element of the handover path detecting whether the connection of the handover path is abnormal specifically comprising: a DPF in the current serving ASN terminated with the second handover path detecting whether a failed path exists in a second process of processing a handover path establishment confirmation message transmitted by the target BS terminated with the second handover path; and a DPF in an anchor ASN terminated with the second handover path detecting whether a failed path exists in a third process of processing a handover path establishment confirmation message transmitted by the DPF in the current serving ASN.

Preferably, in the above method, the step that, if it is detected that the connection is abnormal, an abnormal network element in the terminating network element notifying other network elements in the terminating network element to delete the abnormal handover path, specifically comprising: if a failed handover path exists in the second process, the DPF in the current serving ASN sending a path deletion request message to the target BS and the DPF in the anchor ASN, wherein the path deletion request message contains the failed handover path in the second process; the target BS and the DPF in the anchor ASN deleting the failed handover path in the second process according to the received path deletion request message, and sending a path deletion response message to the DPF in the current serving ASN; and the DPF in the current serving ASN sending a path deletion confirmation message to the target BS and the DPF in the anchor ASN according to the received path deletion response message.

Preferably, in the above method, the step that, if it is detected that the connection is abnormal, an abnormal network element in the terminating network element notifying other network elements in the terminating network element to delete the abnormal handover path, specifically comprising: if a failed handover path exists in the third process, the DPF in the anchor ASN sending a path deletion request message to the DPF in the current serving ASN, wherein the path deletion request message contains the failed handover path in the third process; the DPF in the current serving ASN deleting the failed handover path in the third process according to the received path deletion request message, and sending the path deletion request message to the target BS; the target BS deleting the failed handover path in the third process according to the received path deletion request message, and sending a path deletion response message to the DPF in the current serving ASN; the DPF in the current serving ASN sending the path deletion response message to the DPF in the anchor ASN; the DPF in the anchor ASN sending a path deletion confirmation message to the DPF in the current serving ASN according to the received path deletion response message; and the DPF in the current serving ASN sending the path deletion confirmation message to the target BS.

Preferably, in the above method, the step of establishing a handover path for the ASN handover being established specifically comprises: establishing a third handover path of a handover in the current serving ASN.

Preferably, in the above method, the step of a terminating network element of the handover path detecting whether the connection of the handover path is abnormal specifically includes: the DPF in the current serving ASN terminated with the third handover path detecting whether there is a path that the target BS failed to process according to the handover path establishment confirmation message sent by the target BS terminated with the third handover path; and the DPF in the current serving ASN detecting whether a failed path exists in a fourth process of processing the handover path establishment confirmation message.

Preferably, in the above method, the step that, if it is detected that the connection is abnormal, an abnormal network element in the terminating network element other network elements in the terminating network element to delete the abnormal handover path, specifically comprises: if there is a path that the target BS failed to process, the DPF in the current serving ASN sending a path deletion request message to the DPF in the anchor ASN, wherein the path deletion request message contains the path that the target BS failed to process; the DPF in the anchor ASN deleting the path that the target BS failed to process according to the received path deletion request message, and sending a path deletion response message to the DPF in the current serving ASN; and the DPF in the current serving ASN sending a path deletion confirmation message to the DPF in the anchor ASN according to the received path deletion response message.

Preferably, in the above method, the step that, if it is detected that the connection is abnormal, an abnormal network element in the terminating network element other network elements in the terminating network element to delete the abnormal handover path, specifically comprises: if a failed handover path exists in the fourth process, the DPF in the current serving ASN sending a path deletion request message to the target BS and the DPF in the anchor ASN terminated with the third handover path, wherein the path deletion request message contains the failed handover path in the fourth process; the target BS and the DPF in the anchor ASN deleting the failed handover path in the fourth process according to the received path deletion request message, and sending a path deletion response message to the DPF in the current serving ASN; and the DPF in the current serving ASN sending a path deletion confirmation message to the target BS and the DPF in the anchor ASN according to the received path deletion response message.

To achieve the above object, according to another aspect of the present invention, a handover device for the ASN is provided, which comprises: an establishing module for establishing a handover path for an ASN handover; a detecting module, used by a terminating network element of the handover path for detecting whether the connection of the handover path is abnormal; and a deleting module, used by an abnormal network element in the terminating network element for notifying other network elements in the terminating network element to delete the abnormal handover path, if it is detected that the connection is abnormal.

In the above embodiments, after a handover path for an ASN handover is established, whether the connection of the handover path is abnormal is detected, and if the connection is abnormal, the ASN network element terminated with the handover path deletes the abnormal handover path through the interaction of a message of path deletion, which effectively ensures the data consistency of data paths between the network elements, enhances the utilization rate of ASN network resources and the transmission efficiency of messages, and is beneficial to dealing with data service. Thus, it settles the problem that, in the handover method for the ASN in the relevant art, there exists the problem of inconsistency in the number of paths on the relevant network elements, which not only leads to the occupation of much ASN network resource, but also results in the loss of data message, thereby resulting in a failure in data transmission for part of the services of the user, even all of the services of the user.

### Brief Description of the Accompanying Drawings

The drawings herein are used to provide further understanding of the present invention and form a part of the specification. The embodiments of the present invention and the description thereof are used to explain the present invention rather than unduly limit the present invention. In the accompanying drawings:
Figure 1 shows a diagram of the network architecture of the WiMAX;
Figure 2 shows an internal structural diagram of the ASN;
Figure 3 shows a flowchart of the handover in the Anchor ASN in the relevant art;
Figure 4 shows a flowchart of an inter-ASN handover in the relevant art;
Figure 5 shows a flowchart of the handover in the Serving ASN in the relevant art;
Figure 6 shows a flowchart of the handover method according to the first embodiment of the present invention;
Figure 7 shows a flowchart of the handover method according to the second embodiment of the present invention;
Figure 8 shows a flowchart of the handover method according to the third embodiment of the present invention;
Figure 9 shows a flowchart of the handover method according to the fourth embodiment of the present invention; and
Figure 10 shows a structural diagram of the handover device according to the fifth embodiment of the present invention.

### Detailed Description of the Preferred Embodiment

The present invention is described in detail as follows, with reference to the drawings and in conjunction with the embodiments.

Figure 6 shows a flowchart of the handover method according to the first embodiment of the present invention. The method comprising the steps of:
Step 601, a handover path for an ASN handover being established;
Step 602, terminating network elements of the handover path detecting whether the connection to the handover path is abnormal; and
Step 603, if a terminating network element detects that the connection is abnormal, then the abnormal terminating network element notifying other terminating network elements to delete the abnormal handover path.

In this embodiment, after a handover path for an ASN handover is established, whether the connection of the handover path is abnormal is detected, and if there is an abnormal connection, the ASN network elements terminated with the handover path deletes the abnormal handover path through the interaction by a message of path deletion, which effectively ensures the consistency of data regarding the data paths among the network elements, enhances the utilization rate of ASN network resources and the transmission efficiency of messages, and is beneficial to dealing with data service. Thus, it settles the problem that, in the ASN handover method of the relevant art, inconsistency exists in the number of paths on the relevant network elements, which not only leads to occupation of relatively many ASN network resources, but also results in loss of data messages, thereby resulting in a failure in data transmission for part of the services of the user, even all of the services of the user.

Preferably, in the above method, Step 601 specifically includes: establishing a first handover path for handover in an Anchor ASN. The embodiment is the case where the user performs a handover in the Anchor ASN, and the first handover path is established between the Target BS and the DPF in the Anchor ASN.

Preferably, in the above method, Step 602 specifically includes: the DPF terminated with the first handover path detects whether a failed path exists in a first process of processing a handover path establishment confirmation message.

This embodiment is the case where the user performs a handover in the Anchor ASN. After the DPF receives the handover path establishment confirmation message from the Target BS, during the first process in which the DPF processes the message, the establishment of some paths may fail due to internal abnormality or other reasons. Thus, whether the connection of the handover path is abnormal can be determined by detecting whether a failed handover path exists in the first process.

Preferably, in the above method, step 603 specifically includes: if a failed handover path exists in the first process, the DPF sending a path deletion request message to the Target BS terminated with the first handover path, wherein the path deletion request message contains the failed handover path in the first process; the Target BS deleting the failed handover path during the first process according to the received path deletion request message, and sending a path deletion response message to the DPF; and the DPF sending a path deletion confirmation message to the Target BS according to the received path deletion response message.

This embodiment is the case where the user performs a handover in the Anchor ASN and the DPF detects that a failed handover path exists in the first process. Here, the DPF needs to notify the network element on the opposite side of the first handover path, Target BS, to delete the failed handover path. This can be achieved through the interaction of the messages of path deletion between the DPF and the Target BS.

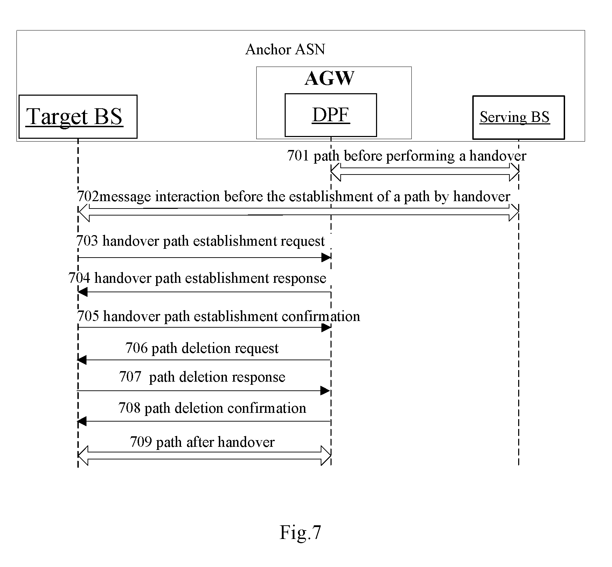

Figure 7 shows a flowchart of the handover method according to the second embodiment of the present invention. The embodiment is the case where the user performs a handover in the Anchor ASN, which specifically comprises the steps of:
Step 701, establishing a path between the Serving BS and the DPF, before performing a handover in the Anchor ASN for the user;
Step 702, message interaction is performed among the Serving BS, the Target BS and the DPF before the establishment of a data path for handover, such that the Serving BS can acquire information of the user;
Step 703, the Target BS sending a handover path establishment request message to the DPF to request for the establishment of a path;
Step 704, the DPF processing the handover path establishment request message and sending a handover path establishment response message to the Target BS;
Step 705, the Target BS sending a handover path establishment confirmation message to the DPF;
Step 706, when the DPF in the Anchor ASN processes the handover path establishment confirmation message in step 705, some of the paths are unsuccessfully processed, and then the information of the failed paths being sent to the Target BS through a path deletion request message, requesting for path deletion;
Step 707, after deleting the path information according to the path deletion request, the Target BS which receives the path deletion request sending a path deletion response to the DPF in the Anchor ASN;
Step 708, after receiving the path deletion response message, the DPF in the Anchor ASN sending a path deletion confirmation message to the BS to confirm that the path deletion has been completed; and
Step 709, a path being established between the Target BS and the DPF after the completion of the handover.

This embodiment makes full use of the flow of the handover in the Anchor ASN of the relevant art. The consistency of data regarding the data paths between the network elements is ensured by adding the interaction by the messages of path deletion between the network elements, which can be easily implemented. This method avoids the failure of some services of the user caused by the inconsistency in the number of paths, and at the same time, saves the network resources occupied by unnecessary paths in some ASNs.

Preferably, in the above method, Step 601 specifically includes: establishing a second handover path for an inter-ASN handover. The embodiment is the case where the user performs an inter-ASN handover, wherein the second handover path is divided into two sections; one section is established between the Target BS and the DPF in the Serving ASN, and the other section is established between the DPF in the Serving ASN and the DPF in the Anchor ASN.

Preferably, in the above method, Step 602 specifically includes: the DPF in the Serving ASN terminated with the second handover path detects whether a failed path exists in a second process of processing a handover path establishment confirmation message transmitted by the Target BS terminated with the second handover path; and a DPF in an Anchor ASN terminated with the second handover path detects whether a failed path exists in a third process of processing a handover path establishment confirmation message transmitted by the DPF in the Serving ASN.

The embodiment is the case where the user performs an inter-ASN handover. After the DPF in the Serving ASN receives the handover path establishment confirmation message from the Target BS, the DPF in the Serving ASN processes the message, and during this second process, the establishment of some paths may fail due to internal abnormality or other reasons; in addition, after the DPF in the Anchor ASN receives the handover path establishment confirmation message transmitted by the DPF in the Serving ASN, the DPF in the Anchor ASN processes the message, and during this third process, the establishment of some paths may fail due to internal abnormality or other reasons. Thus, whether the connection of the handover path is abnormal can be determined by detecting whether a failed handover path exists in the second process and the third process.

Preferably, in the above method, Step 603 specifically includes: if a failed handover path exists in the second process, the DPF in the Serving ASN sending a path deletion request message to the Target BS and the DPF in the Anchor ASN, wherein the path deletion request message contains the failed handover path in the second process; the Target BS and the DPF in the Anchor ASN deleting the failed handover path during the second process according to the received path deletion request message, and sending a path deletion response message to the DPF in the Serving ASN; and the DPF in the Serving ASN sending a path deletion confirmation message to the Target BS and the DPF in the Anchor ASN according to the received path deletion response message.

The embodiment is the case where the user performs the inter-ASN handover and the DPF in the Serving ASN detects that a failed handover path exists in the second process. Here, the DPF in the Serving ASN needs to notify the network elements on the opposite side of the second handover path, Target BS and the DPF in the Anchor ASN, to delete the failed handover path, and the object can be achieved through the interaction of the messages of path deletion among the DPF in the Serving ASN, the Target BS, and the DPF in the Anchor ASN.

Preferably, in the above method, Step 603 specifically includes: if a failed handover path exists in the third process, the DPF in the Anchor ASN sends a path deletion request message to the DPF in the Serving ASN, wherein the path deletion request message contains the failed handover path in the third process; the DPF in the Serving ASN deletes the failed handover path in the third process according to the received path deletion request message, and sends the path deletion request message to the Target BS; the Target BS deletes the failed handover path in the third process according to the received path deletion request message, and sends a path deletion response message to the DPF in the Serving ASN; the DPF in the Serving ASN sends the path deletion response message to the DPF in the Anchor ASN; the DPF in the Anchor ASN sends a path deletion confirmation message to the DPF in the Serving ASN according to the received path deletion response message; and the DPF in the Serving ASN sends the path deletion confirmation message to the Target BS.

The embodiment is the case where the user performs the inter-ASN handover and the DPF in the Anchor ASN detects that a failed handover path exists in the third process. Here, the DPF in the Anchor ASN needs to notify the network elements on the opposite side of the second handover path, Target BS and the DPF in the Serving ASN, to delete the failed handover path, and the object can be achieved through the interaction of the messages of path deletion among the DPF in the Anchor ASN, the Target BS, and the DPF in the Serving ASN.

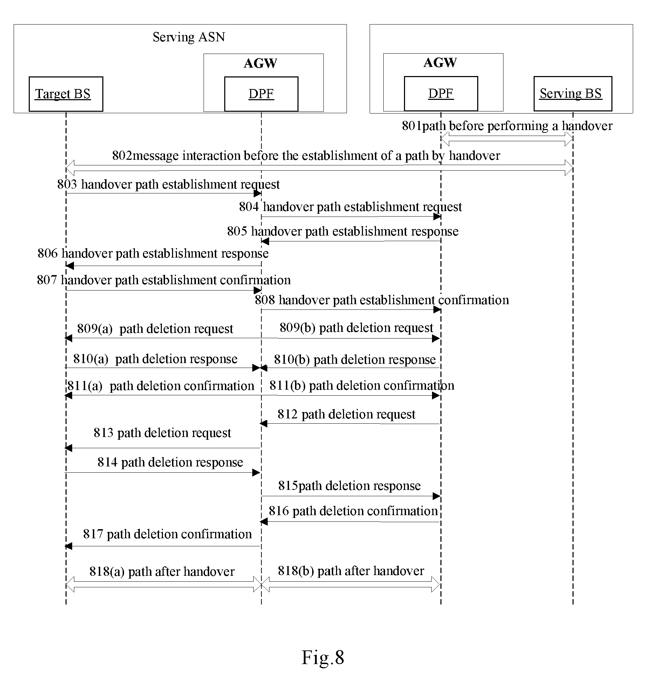

Figure 8 shows a flowchart of the handover method according to the third embodiment of the present invention.
Step 801, establish a path between the Serving BS and the DPF in the Anchor ASN, before performing an inter-ASN handover;
Step 802, message interaction is performed among the Serving BS, the Target BS and the DPF before the establishment of a data path by handover, such that the Serving BS can acquire information of the user;
Step 803, the Target BS in the Serving ASN sends a handover path establishment request message to the DPF in the Serving ASN to request for the establishment of a path;
Step 804, the DPF in the Serving ASN processes the handover path establishment request message, and forwards the handover path establishment request message to the DPF in the Anchor ASN;
Step 805, the DPF in the Anchor ASN processes the handover path establishment request message, and sends a handover path establishment response message to the DPF in the Serving ASN, the handover path establishment response message carrying the processing result of the establishment of the path;
Step 806, the DPF in the Serving ASN processes the handover path establishment response message, and sends the handover path establishment response message to the Target BS in the Serving ASN, the handover path establishment response message carrying the processing result of the establishment of the path;
Step 807, the Target BS in the Serving ASN sends a handover path establishment confirmation message to the DPF in the Serving ASN;
Step 808, the DPF in the Serving ASN processes the handover path establishment confirmation message, and sends the handover path establishment confirmation message to the DPF in the Anchor ASN;
Step 809, the DPF in the Serving ASN sends, through the path deletion request message, the information of the paths which are processed unsuccessfully in Step 807 to the Target BS in the Serving ASN (as shown in step 809(a)) and the DPF in the Anchor ASN (as shown in Step 809(b)) to request for path deletion;
Step 810(a), after deleting the path information of the path deletion request, the Target BS in the Serving ASN which receives the path deletion request sends a path deletion response to the DPF in the Serving ASN;
Step 810(b), after deleting the path information of the path deletion request, the DPF in the Anchor ASN which receives the path deletion request sends a path deletion response to the DPF in the Serving ASN;
Step 811(a), after receiving the path deletion response message from the Target BS in the path Serving ASN, the DPF in the Serving ASN sends a path deletion confirmation message to the Target BS in the Serving ASN to confirm that the path deletion has been completed;
Step 811(b), after receiving the deleting response message from the DPF in the path Anchor ASN, the DPF in the Serving ASN sends a path deletion confirmation message to the DPF in the Anchor ASN to confirm that the path deletion has been completed;
Step 812, when the DPF in the Anchor ASN processes the handover path establishment confirmation message in step 808, after the processing of some of the paths fails, the information of the paths which are processed unsuccessfully is transmitted, through the path deletion request message, to the DPF in the Serving ASN, requesting for path deletion;
Step 813, after deleting the path information according to the path deletion request, the DPF in the Serving ASN which receives the path deletion request sends the path deletion response to the Target BS in the Serving ASN to request for path deletion;
Step 814, after deleting the path information according to the path deletion request, the BS in the Serving ASN which receives the path deletion request sends the path deletion response to the Target BS in the Serving ASN;
Step 815, the DPF in the Serving ASN which receives the path deletion response sends the path deletion response to the DPF in the Anchor ASN;
Step 816, the DPF in the Anchor ASN which receives the path deletion response sends the path deletion confirmation to the DPF in the Serving ASN to confirm that the path deletion has been finished;
Step 817, the DPF in the Serving ASN which receives the path deletion confirmation sends the path deletion confirmation to the Target BS in the Serving ASN to confirm that the path deletion has been finished; and
Step 818, the path established after the completion of the handover, the path is divided into two sections, viz. 818(a) and 818(b).

This embodiment makes full use of the flow of the inter-ASN handover in the relevant art. The data consistency of the data paths between the network elements is ensured by adding the interaction of the message of path deletion between the network elements, which can be easily implemented. This method avoids the failure of some services of the user caused by the inconsistency in the number of paths, and at the same time, saves the network resources occupied by unnecessary paths in some ASNs.

Preferably, in the above method, Step 601 specifically includes: establishing a third handover path of a handover in the Serving ASN. This embodiment is the case where the user performs the handover in the Serving ASN, and the third handover path is established between the Target BS and the DPF in the Serving ASN.

Preferably, in the above method, Step 602 specifically includes: the DPF in the Serving ASN terminated with the third handover path detects whether there is a path that the target BS failed to process according to the handover path establishment confirmation message transmitted by the Target BS terminated with the third handover path; and the DPF in the Serving ASN detects whether a failed path exists in a fourth process of processing the handover path establishment confirmation message.

This embodiment is the case where the user performs the handover in the Serving ASN. The DPF receives the handover path establishment confirmation message transmitted from the Target BS, the message may include a path which is processed unsuccessfully by the Target BS, the DPF processes the message, and in this fourth process, the establishment of some paths may fail due to internal abnormality or other reasons. Thus, whether the connection of the handover path is abnormal can be determined by detecting whether there is a path that the target BS failed to process and whether a failed handover path exists in the fourth process.

Preferably, in the above method, Step 603 specifically includes: if there is a path that the target BS failed to process, the DPF in the Serving ASN sends a path deletion request message to the DPF in the Anchor ASN, wherein the path deletion request message contains the path that the target BS failed to process; the DPF in the Anchor ASN deletes the path that the target BS failed to process according to the received path deletion request message, and sends a path deletion response message to the DPF in the Serving ASN; and the DPF in the Serving ASN sends a path deletion confirmation message to the DPF in the Anchor ASN according to the received path deletion response message.

This embodiment is the case where the user performs the handover in the Serving ASN and the existence of a path which is processed unsuccessfully by the Target BS is detected. Here, the DPF in the Serving ASN needs to notify the DPF in the Anchor ASN to delete the failed handover path, and the object can be achieved through the interaction of the messages of path deletion between the DPF in the Serving ASN and the DPF in the Anchor ASN.

Preferably, in the above method, Step 603 specifically includes: if a failed handover path exists in the fourth process, the DPF in the Serving ASN sends a path deletion request message to the Target BS and the DPF in the Anchor ASN terminated with the third handover path, wherein the path deletion request message contains the failed handover path in the fourth process; the Target BS and the DPF in the Anchor ASN delete the failed handover path in the fourth process according to the received path deletion request message, and transmit a path deletion response message to the DPF in the Serving ASN; and the DPF in the Serving ASN sends a path deletion confirmation message to the Target BS and the DPF in the Anchor ASN according to the received path deletion response message.

This embodiment is the case where the user performs the handover in the Serving ASN and it is detected that a failed handover path exists in the fourth process. Here, the DPF in the Serving ASN needs to notify the Target BS in the Serving ASN and the DPF in the Anchor ASN to delete the failed handover path, and the object can be achieved through the interaction of the message of path deletion between the DPF in the Serving ASN, the Target BS, and the DPF in the Anchor ASN.

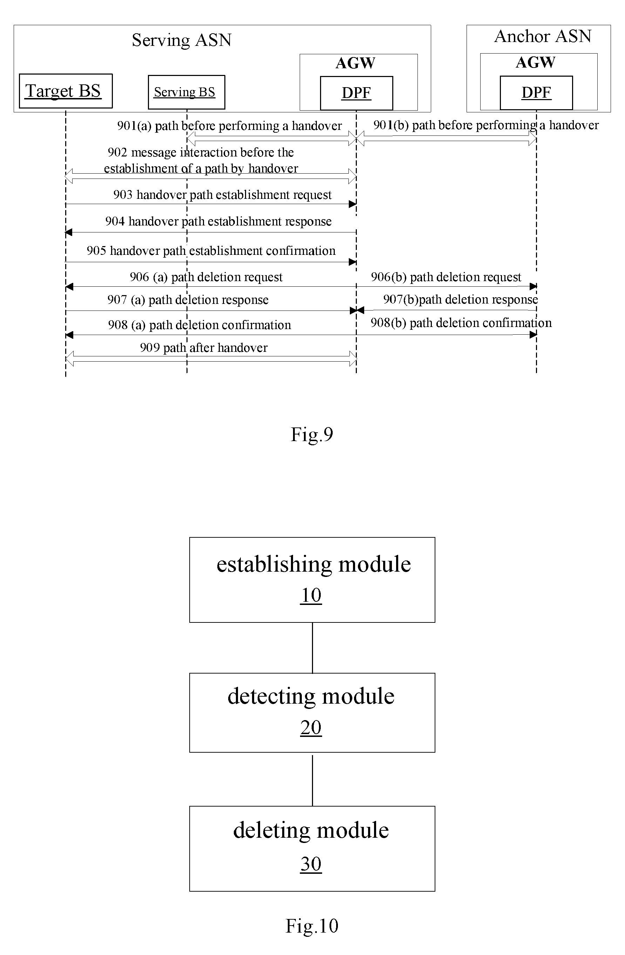

Figure 9 shows a flowchart of the handover method according to the fourth embodiment of the present invention.
Step 901, establish a path before the handover, wherein the path is divided into two sections, viz. 901(a) and 901(b);
Step 902, perform message interaction among the Serving BS, the Target BS and the DPF before the establishment of a data path by handover, such that the Serving BS can acquire information of the user;
Step 903, the Target BS sends a handover path establishment request message to the DPF to request for the establishment of a path;
Step 904, the DPF processes the request and sends a handover path establishment response message to the Target BS;
Step 905, the Target BS sends a handover path establishment confirmation message to the DPF;
Step 906, the DPF in the Serving ASN sends, through a path deletion request message, the information of the paths which are processed unsuccessfully in Step 905 to the Target BS in the Serving ASN (as shown in Step 906(a)) and the DPF in the Anchor ASN (as shown in Step 906(b)) respectively, requesting for path deletion;
Step 907(a), the Target BS in the Serving ASN which receives the path deletion request sends a path deletion response to the DPF in the Serving ASN, after deleting the path information according to the path deletion request;
Step 907(b), the DPF in the Anchor ASN which receives the path deletion request sends a path deletion response to the DPF in the Serving ASN, after deleting the path information of the path deletion request;
Step 908(a), after receiving the path deletion response message from the Target BS in the path Serving ASN, the DPF in the Serving ASN sends a path deletion confirmation message to the Target BS in the Serving ASN to confirm that the path deletion has been completed;
Step 908(b), after receiving the path deletion response message from the DPF in the path Anchor ASN, the DPF in the Serving ASN sends a path deletion confirmation message to the DPF in the Anchor ASN to confirm that the path deletion has been completed;
Step 909, a path established between the Target BS and the DPF after the completion of the handover.

The embodiment makes full use of the flow of the handover in the Serving ASN in the relevant art. The data consistency of the data paths between the network elements is ensured by adding the interaction of the message of path deletion between the network elements, which can be easily implemented. This method avoids the failure of some services of the user caused by the inconsistency in the number of paths, and at the same time, saves the network resources occupied by unnecessary paths in some ASNs.

Figure 10 shows a structural diagram of the handover device according to the fifth embodiment of the present invention, the device comprising:
an establishing module 10, configured to establish a handover path for an ASN handover;
a detecting module 20, configured, for a terminating network element of the handover path, to detect whether the connection of the handover path is abnormal; and
a deleting module 30, configured, for an abnormal terminating network element, to notify the other terminating network elements to delete the abnormal handover path, if it is detected that the connection is abnormal.

In the embodiment, the establishing module 10 is first configured to establish a handover path for an ASN handover, and then the detecting module 20 is configured to detect whether the connection of the handover path is abnormal. If the connection is abnormal, the deleting module 30 is configured to delete the abnormal handover path through the interaction of a message of path deletion, which effectively ensures the consistency of data regarding data paths among the network elements, enhances the utilization rate of ASN network resources and the transmission efficiency of messages, and is beneficial to dealing with data service. Thus, it settles the problem that, in the ASN handover method in the relevant art, there exists the problem of inconsistency in the number of paths on the relevant network elements, which not only leads to occupation of relatively many ASN network resources, but also results in loss of data messages, thereby resulting in a failure in data transmission for part of the services of the user, even all of the services of the user.

From the above description, it can be seen that the above embodiments of the present invention effectively ensure the data consistency of data paths between the network elements, enhance the utilization rate of ASN network resources and the transmission efficiency of messages, and are beneficial to dealing with data service.

Obviously, those skilled in the art shall appreciate, all of the above modules or steps of the present invention can be realized by a universal computing device, they can be concentrated in a single computing device, or distributed in the network consisting of several computing devices, preferably, they can be realized by program codes executable by the computing device, such that they can be stored in a storage device to be executed by the computing device, or each of them can be manufactured into an integrated circuit module, or several modules or steps of them can be manufactured into a single integrated circuit module. In this way, the present invention is not limited to the combination of any particular hardware and software.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of the claims of the present invention.

## Claims

1. A handover method for an access service network ASN, **characterized by** comprising the steps of:
establishing a handover path for an ASN handover;
a terminating network element of the handover path detecting whether the connection of the handover path is abnormal; and
if it is detected that the connection is abnormal, an abnormal network element in the terminating network element notifying other network elements in the terminating network element to delete the handover path.

2. The method according to Claim 1, **characterized in that** the step of establishing a handover path for the ASN handover comprises:
establishing a first handover path of a handover in an anchor ASN.

3. The method according to Claim 2, **characterized in that** the step of a terminating network element of the handover path detecting whether the connection of the handover path is abnormal comprises:
a data path function DPF terminated with the first handover path detecting whether a failed handover path exists in a first process of processing a handover path establishment confirmation message.

4. The method according to Claim 3, **characterized in that** the step of an abnormal network element in the terminating network element notifying other network elements in the terminating network element to delete the handover path comprises:
the DPF sending a path deletion request message to a target base station BS terminated with the first handover path, wherein the path deletion request message contains the failed handover path in the first process;
the target BS deleting the failed handover path in the first process according to the path deletion request message, and sending a path deletion response message to the DPF; and
the DPF sending a path deletion confirmation message to the target BS according to the path deletion response message.

5. The method according to Claim 1, **characterized in that** the step of establishing a handover path for the ASN handover comprises:
establishing a second handover path of an inter-ASN handover.

6. The method according to Claim 5, **characterized in that** the step of a terminating network element of the handover path detecting whether the connection of the handover path is abnormal comprises:
a DPF in a current serving ASN terminated with the second handover path detecting whether a failed path exists in a second process of processing a handover path establishment confirmation message transmitted by the target BS terminated with the second handover path; and
a DPF in an anchor ASN terminated with the second handover path detecting whether a failed path exists in a third process of processing a handover path establishment confirmation message transmitted by the DPF in the current serving ASN.

7. The method according to Claim 6, **characterized in that** the step of an abnormal network element in the terminating network element notifying other network elements in the terminating network element to delete the abnormal handover path comprises:
the DPF in the current serving ASN sending a path deletion request message to the target BS and the DPF in the anchor ASN, wherein the path deletion request message contains the failed handover path in the second process;
the target BS and the DPF in the anchor ASN deleting the failed handover path in the second process according to the path deletion request message, and sending a path deletion response message to the DPF in the current serving ASN; and
the DPF in the current serving ASN sending a path deletion confirmation message to the target BS and the DPF in the anchor ASN according to the path deletion response message.

8. The method according to Claim 6, **characterized in that** the step of an abnormal network element in the terminating network element notifying other network elements in the terminating network element to delete the abnormal handover path comprises:
the DPF in the anchor ASN sending a path deletion request message to the DPF in the current serving ASN, wherein the path deletion request message contains the failed handover path in the third process;
the DPF in the current serving ASN deleting the failed handover path in the third process according to the path deletion request message, and sending the path deletion request message to the target BS;
the target BS deleting the failed handover path in the third process according to the path deletion request message, and sending a path deletion response message to the DPF in the current serving ASN;
the DPF in the current serving ASN sending the path deletion response message to the DPF in the anchor ASN;
the DPF in the anchor ASN sending a path deletion confirmation message to the DPF in the current serving ASN according to the received path deletion response message; and
the DPF in the current serving ASN sending the path deletion confirmation message to the target BS.

9. The method according to Claim 1, **characterized in that** the step of a handover path for the ASN handover being established comprising:
establishing a third handover path of a handover in the current serving ASN.

10. The method according to Claim 9, **characterized in that** the step of a terminating network element of the handover path detecting whether the connection of the handover path is abnormal comprises:
the DPF in the current serving ASN terminated with the third handover path detecting whether there is a path that the target BS failed to process according to the handover path establishment confirmation message transmitted by the target BS terminated with the third handover path; and
the DPF in the current serving ASN detecting whether a failed path exists in a fourth process of processing the handover path establishment confirmation message.

11. The method according to Claim 10, **characterized in that** the step of an abnormal network element in the terminating network element notifying other network elements in the terminating network element to delete the abnormal handover path comprises:
the DPF in the current serving ASN sending a path deletion request message to the DPF in the anchor ASN, wherein the path deletion request message contains the path that the target BS failed to process;
the DPF in the anchor ASN deleting the path that the target BS failed to process according to the path deletion request message, and sending a path deletion response message to the DPF in the current serving ASN; and
the DPF in the current serving ASN sending a path deletion confirmation message to the DPF in the anchor ASN according to the path deletion response message.

12. The method according to Claim 10, **characterized in that** the step of an abnormal network element in the terminating network element notifying other network elements in the terminating network element to delete the abnormal handover path specifically comprises:
the DPF in the current serving ASN sending a path deletion request message to the target BS and the DPF in the anchor ASN terminated with the third handover path, wherein the path deletion request message contains the failed handover path in the fourth process;
the target BS and the DPF in the anchor ASN deleting the failed handover path in the fourth process according to the received path deletion request message, and sending a path deletion response message to the DPF in the current serving ASN; and
the DPF in the current serving ASN sending a path deletion confirmation message to the target BS and the DPF in the anchor ASN according to the received path deletion response message.

13. A handover device for the ASN, **characterized by** comprising:
an establishing module for establishing a handover path for an ASN handover;
a detecting module for detecting whether a connection of the handover path is abnormal; and
a deleting module for deleting an abnormal handover path.
